# EUROPEAN PATENT APPLICATION

(11) **EP 4 379 640 A1**
(43) Date of publication of application: **05.06.2024**
(21) Application number: 23210646.8
(22) Date of filing: 17.11.2023
(51) Int. Cl.: G06Q 40/03

(54) **SYSTEM, METHOD AND APPARATUS FOR ADAPTIVELY EXPLORING LENDING MODEL IMPROVEMENT**

(30) Priority: 29.11.2022 US 202218070726
(71) Applicant: Affirm, Inc., San Francisco, CA 94108 (US)
(72) Inventor: Wu, Yonglin, San Francisco (US); Kumar, Nitesh, San Francisco (US)
(74) Representative: Piotrowicz, Pawel Jan Andrzej

(57) **Abstract**

A method for exploring lending approval model improvement may include receiving a plurality of loan applications, applying a model to the loan applications to determine an approved set of customers approved for financing under the model and a set of rejected customers rejected for financing under the model, determining, from the set of rejected customers, a selected group of rejected customers and approving the selected group for financing, where loan repayment activity of the selected group defines an exploratory data set, determining, based on the exploratory data set, a set of successful rejected applicants that repay loans associated with the financing for which the selected group was approved, and employing the exploratory data set to evaluate the model for replacement or modification based on the set of successful rejected applicants.

## Description

### TECHNICAL FIELD

Example embodiments generally relate to financial industry technologies and, in particular, relate to apparatuses, systems, and methods for performing intelligent exploration regarding improvement of lending approval models.

### BACKGROUND

The financial industry is comprised of many thousands of customers, merchants, lenders, borrowers, and other role players that all interact in various ways to enable customers to ultimately have access to goods and services provided by merchants. Credit and debit transactions have long been a way that individuals have managed point of sale transactions to ensure seamless transfer of funds from customers, or on their behalf, to merchants for relatively routine or small transactions. Meanwhile, obtaining a loan from a bank has long been the most common way of obtaining financing for non-routine or larger transactions. More recently, buy now, pay later financing has become a popular option.

In many of the cases above, a customer may apply for credit via an online system that intakes certain information, and then makes determinations regarding whether (and in some cases how) to extend credit to the customer. The application process is typically automated in some form in terms of gathering required information, making any needed checks or confirmations (e.g., regarding identity verification, account verification, creditworthiness, etc.), making a decision on the application, and distribution of funds or advancing a line of credit. The automation of the process necessarily involves the employment of algorithms and policies that can often be executed via software programming.

Keeping a credit network running sustainably often depends on the ability of a company to accurately assess the risk associated with extending credit to a given customer and estimate the performance of outstanding loans. Thus, most lenders employ models that define certain minimum thresholds that must be met for approval of loan extension. While some lenders may increase volume by simply lowering the thresholds, the increased risk associated with lowering the thresholds may be felt with corresponding reduction in the financial performance of the underwriter. However, it may be possible to improve the financial performance of the underwriter not only by selecting the best customers to grant loans, and accurately predicting the performance of the loans, but by exploring what signals or parameters (or combinations of the same) are actually the best indicators of who are the best customers to which loans can be granted. Doing so may create a win-win scenario in which volume may be increased for the underwriter and satisfaction may be increased for more customers.

### BRIEF SUMMARY OF SOME EXAMPLES

Accordingly, some example embodiments may enable the provision of technical means by which to provide lending exploration to search for the best signals and thresholds for optimal financial performance.

In an example embodiment, a method for exploring lending approval model improvement may be provided. The method may include receiving a plurality of loan applications, applying a model to the loan applications to determine an approved set of customers approved for financing under the model and a set of rejected customers rejected for financing under the model, determining, from the set of rejected customers, a selected group of rejected customers and approving the selected group for financing, where loan repayment activity of the selected group defines an exploratory data set, determining, based on the exploratory data set, a set of successful rejected applicants that repay loans associated with the financing for which the selected group was approved, and employing the exploratory data set to evaluate the model for replacement or modification based on the set of successful rejected applicants.

In another example embodiment, an apparatus for exploring lending approval model improvement is provided. The apparatus may include processing circuitry. The processing circuitry may be configured for receiving a plurality of loan applications, applying a model to the loan applications to determine an approved set of customers approved for financing under the model and a set of rejected customers rejected for financing under the model, determining, from the set of rejected customers, a selected group of rejected customers and approving the selected group for financing, where loan repayment activity of the selected group defines an exploratory data set, determining, based on the exploratory data set, a set of successful rejected applicants that repay loans associated with the financing for which the selected group was approved, and employing the exploratory data set to evaluate the model for replacement or modification based on the set of successful rejected applicants.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for improvement of a lending approval model according to an example embodiment;
FIG. 2 illustrates a functional block diagram of a lending exploration platform according to an example embodiment;
FIG. 3 is a block diagram illustrating overall operation of the lending exploration platform with respect to improving or replacing the lending approval model in accordance with an example embodiment; and
FIG. 4 illustrates a block diagram of a method of exploring lending approval model improvement in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a lending exploration platform that can be instantiated at an apparatus comprising configurable processing circuitry. The processing circuitry may be configured to execute various processing functions on financial data using the techniques described herein. The lending exploration platform may, for example, be configured to provide a way to explore alternative model parameters based on intelligent exploration of outcomes that result from employing different model parameters and determining commonalities associated with positive outcomes so that model improvement may be achieved. The goal of the continuously improving models, and exploring how to do so, may maximize the ability to select customers that will repay loans and thereby drive volume for the underwriter and approve more customers, while also minimizing risk or maximizing profit to the underwriter.

In a typical loan application process, the customer applies for a loan, and the underwriter employs a model to apply the information received about the customer in order to determine whether to approve the customer for a loan or decline to issue a loan to the customer. This activity may be referred to as making an approval determination. When the customer is approved, it may be possible to evaluate the performance of the model by tracking how the customer (and all other approved customers) perform with respect to loan repayment. If performance is not as desired, underwriters typically just slide various thresholds up or down to change the performance in the direction desired. For example, if the model is producing a high percentage of repayments, but volume is too low, the underwriter may simply lower the credit rating limit required for approval (or a similar parameter). This will drive more volume, but likely also more loan defaults. Conversely, if the model is producing too many defaults, the underwriter may simply raise the credit limit required for approval (or a similar parameter) to ensure that it is more likely that loans are repaid since approvals will only go to customers with better credit ratings who are more likely to repay the loans. However, less volume will likely also result from this type of a change.

Conventionally, the tools available to underwriters for changing the set of approved customers have been very limited, in that the options have effectively included only changing parameter thresholds (as noted above) for a given model, or changing to a different model. It has not been possible to adaptively explore potential changes to the model itself other than the simply changing of parameter thresholds. This shortcoming is generally related to the fact that evaluations of the model have been limited to only an evaluation of loans that are approved under the model. In this regard, for example, after the model is used to define a set of approved applicants or customers and a set of rejected applicants or customers, the evaluation of conventional models has been limited only to an evaluation of the performance of the approved customers. Thus, there is no way to understand what would have happened for any of the loans that were not issued. In other words, there is no way to know how the set of rejected customers would have performed.

Within this set of rejected customers, undoubtedly there are some customers that may have repaid their loans, and some that may not have. Clearly, a model capable of identifying the individuals within the set of rejected customers that would have repaid their loans would be preferred to the model that rejected the set of rejected customers. Thus, if there was a way to evaluate commonalities among those customers from the set of rejected customers that would have been successful, the commonalities identified could be favored in an improvement to the model so that the improved model may focus more on identifying customers that share the commonalities of the successful rejected applicants from among the original set of rejected customers . Example embodiments provide a technical means by which to explore model changes by creating a set of data that normally would not exist, and then evaluating that new data set to find commonalities among successful rejected applicants from the original set of rejected customers to correspondingly improve the underlying model that would otherwise have rejected those successful rejected applicants. The commonalities are then used to define improvements to the model that was originally used in order to favor the common traits of the successful rejected applicants. Thereafter, the improved model should be capable of identifying more successful applicants as a whole, thereby growing the ranks of the set of approved customers by adding to its population more customers that would have otherwise been rejected, but are nevertheless likely to repay their loans. On the whole, volume may increase, and profitability may also increase as a result of this technical means of improving model accuracy.

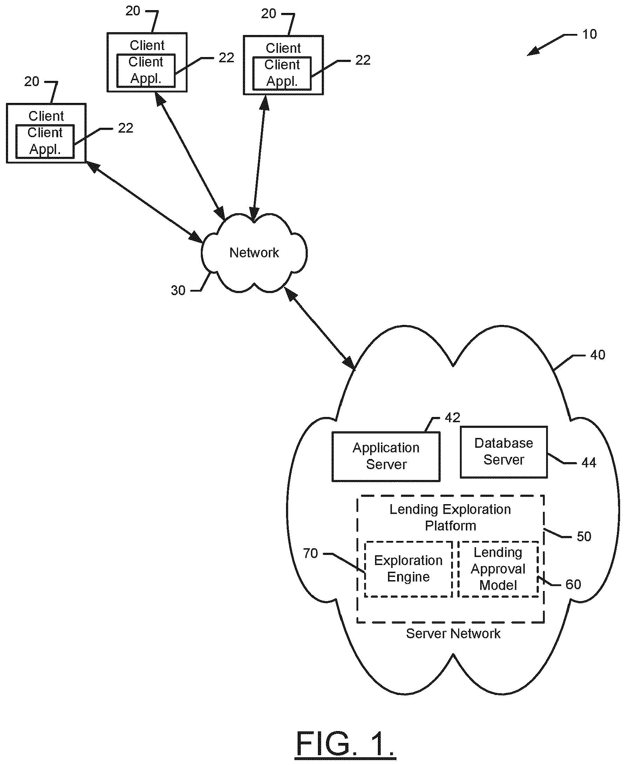

An example embodiment will now be described in reference to FIG. 1, which illustrates an example system in which an embodiment of the present invention may be employed. As shown in FIG. 1, a financing program management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement, employ or interact with example embodiments. Thus, in some embodiments, one or more of the clients 20 may be associated with an individual (e.g., a customer) that may be interested in obtaining a loan (e.g., a financing option of any of various types including installment loans). In general, the clients 20 may be terminals or platform entities that are capable of interacting with example embodiments, and there could be as few as one, or a host of such terminals or entities. Moreover, in some cases, distributed computations, calculations, decisions, etc., may be made at respective ones of the clients 20.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or data/information for consumption/processing at the clients 20). As such, for example, the client application 22 may include corresponding executable instructions for configuring the client 20 to provide corresponding functionalities for modeling, sharing, processing and/or utilizing financial data and interacting with an underwriter as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols. In some cases, the other devices to which the clients 20 may be operably coupled via the network 30 may include communication devices (e.g., computer, a personal digital assistant (PDA), cellular phone, smart phone, tablet, or the like belonging to a merchant who may be interested in selling goods to the customer, or to other entities (e.g., banks and payment services) that may be involved in granting and/or servicing loans. The merchant, bank, payment service, etc., communication devices may have similar hardware to the clients 20 in some cases, and one or more of the clients 20 could represent an instance of the communication devices belonging to such entities.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices and, in some cases, could be embodied on a single computer. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to lending exploration platform 50, and more particularly relating to facilitating financial computations and calculations related to making determinations regarding whether to approve a customer associated with one of the clients 10 for a loan. Thus, in some cases, the application server 42 and/or the lending exploration platform 50 may be configured for, among other things, employing models that determine whether to grant approval based on various factors. In some cases, those factors may include modeling of cash flow and repayment of loans for individuals with respective different ratings or classifications in each of various different areas that may be parameters for consideration such as, for example, reported income, liquid assets in accounts linked to a customer profile, credit rating, etc. For example, the application server 42 may be configured to provide (via the lending exploration platform 50) execution of instructions, and storage of information descriptive of events or activities, associated with the lending exploration platform 50 and the execution of financial computations, calculations and modeling on behalf of a user of the system 10 located at one of the clients 20 in real time. In some cases, the financial computations, calculations and modeling may be associated with a financing program that ultimately was either offered to the customer, or that is being requested by the customer in association with executing a financial transaction that may include obtaining installment loan financing, and the activities associated therewith. Thus, example embodiments support the provision of a set of options for different instances of a loan/product that can be offered to a customer to cause the customer to submit a loan application detailing information required by the lender or underwriter (and operator of the lending exploration platform 50) to determine whether credit, funds, or other products can be provided to the customer based on information provided in the loan/product application. However, example embodiments may also apply to other types of loans.

In some embodiments, the lending exploration platform 50 may be a technical device, component or module affiliated with the underwriter/lender or an agent of the lender. Thus, the lending exploration platform 50 may operate under control of the lender or agent of the lender to be a technical means by which to carry out activities under direction of the lender/agent or employees thereof. As such, in some embodiments, the clients 20 may access the lending exploration platform 50 services, and more particularly contact the lending exploration platform 50 online and utilize the services provided thereby. However, it should be appreciated that in other embodiments, an application (e.g., the client application 22) enabling the clients 20 to interact with the lending exploration platform 50 (or components thereof) may be provided from the application server 42 (e.g., via download over the network 30) to one or more of the clients 20 to enable recipient clients 20 to instantiate an instance of the client application 22 for local operation such that the lending exploration platform 50 may be a distributor of software enabling individual users to utilize the lending exploration platform 50. Alternatively, another distributor of the software may provide the client 20 with the client application 22, and the lending exploration platform 50 may communicate with the client 20 (via the client application 22) after such download.

In an example embodiment, the client application 22 may therefore include application programming interfaces (APIs) and other web interfaces to enable the client 20 to conduct operations as described herein via the lending exploration platform 50. The client application 22 may include a series of control consoles or web pages including a landing page, onboarding services, activity feed, account settings (e.g., user profile information), transaction management services, payment management services and the like in cooperation with a service application that may be executed at the lending exploration platform 50. Thus, for example, the client application 22 may enable the user or operator to articulate and submit queries, run modeling algorithms, execute budgeting functions, and/or the like using the lending exploration platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the lending exploration platform 50 configured to operate in accordance with an example embodiment of the present invention. In this regard, for example, the lending exploration platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 or another device (e.g., a computer including a user interface) via which individual operators or managers of the entity associated with the facilitation agent may interact with, configure or otherwise maintain the lending exploration platform 50. Thus, it should be appreciated that the functions of the lending exploration platform 50 can be conducted via client-server based interactions involving communications between clients 20 and the server network 30, or may be conducted locally at one of the clients 20 after an instance of the lending exploration platform 50 is downloaded (e.g., via or as the client application 22) locally at the corresponding one of the clients 20.

As such, the environment of FIG. 1 illustrates an example in which provision of data, content and information associated with the financial industry may be accomplished by a particular entity (namely the lending exploration platform 50 residing at the application server 42 or at one of the clients 20). Thus, the lending exploration platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the lending exploration platform 50 may operate to enable the user associated with a given one of the clients 20 to apply for a financing program option (e.g., a loan) that offered to or requested by the user associated with one of the clients 20. In other words, the lending exploration platform 50 may be a means by which to obtain a loan, either in real time while attempting to initiate and pay for a transaction, or in advance of the same. Thus, the lending exploration platform 50 may interact with other or even conventional loan processing components that generate approval decisions on loan applications based on applying a financing model 60. In some example embodiments, the client application 22 may be used in connection with applying for a loan that then triggers the other or conventional loan processing components to run queries, models, calculations that are then used as the basis for determining whether to approve or deny the customer for a financing program, and such actions may or may not be under control of the lending exploration platform 50. In this regard, for example, the lending exploration platform 50 may host or include the other or conventional loan processing components of which the financing model 60 may be a part, or the lending exploration platform 50 may simply be operably coupled to the other or conventional loan processing components of which the financing model 60 is a part. In either case, when the client application 22 is used to request a loan (e.g., via a website and corresponding APIs) the loan approval process may proceed as normal using the financing model 60. However, results of the decision made using the financing model 60 may be communicated to or otherwise known by the lending exploration platform 50. The lending exploration platform 50 may, for a set of rejected applicants who are not approved under the financing model 60, perform the lending exploration operations described herein.

For purposes of describing an example embodiment, the financing model 60 and any other or conventional loan processing components will be described as being part of the lending exploration platform 50. However, the distinction noted above may nevertheless also apply in some cases, where the lending exploration platform 50 could stand outside but communicate with the other or conventional loan processing components and the financing model. Thus, for example, the customer may use one of the clients 20 to request or select a financing program (e.g., a financing option or loan) to finance a transaction, which may also be conducted using services associated with the lending exploration platform 50 or other platforms of the system 10 that are in communication with the lending exploration platform 50, but doing so is not necessary. The lending exploration platform 50 may prompt the client 20 to provide financial information that is necessary to enable the financing model 60 to be applied to the financial information to make an approval decision (i.e., whether to approve or deny the customer for the loan being applied for). In other words, the client 20 may provide a user interface function for interacting with the lending exploration platform 50 to identify the information that will be evaluated using the lending exploration platform 50 to make the approval decision.

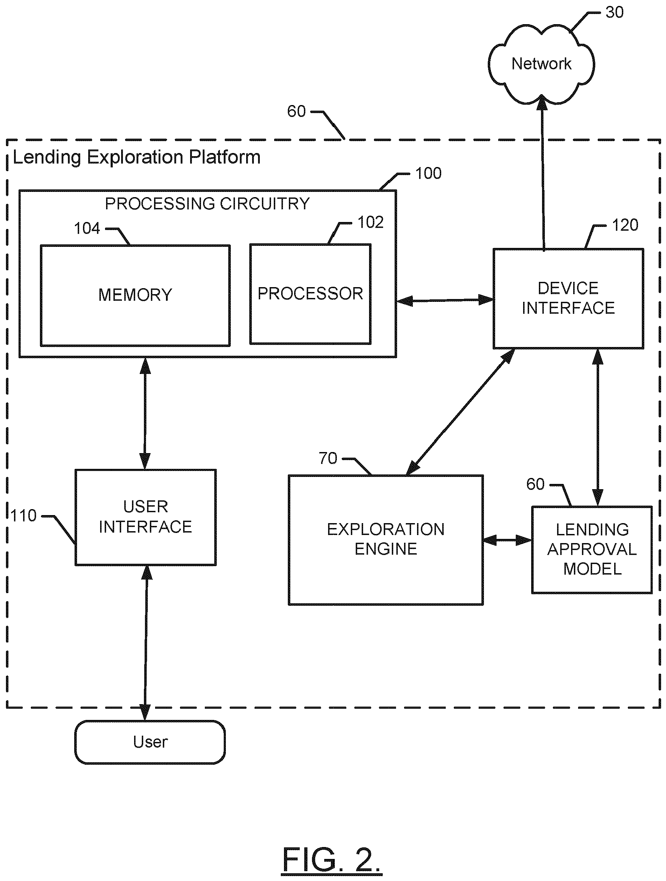

Regardless of how the queries, calculations or modeling activities are initiated, the lending exploration platform 50 of FIG. 1 may be used to manage execution of such activities. Each of these activities may have its own respective timing and calculations and communications that are facilitated by the lending exploration platform 50 and various components of the lending exploration platform 50 may be conducted in parallel. The components, which may be functional modules that operate via API or function calls to respective segmented platforms or a monolith or other collection of rules, policies, instructions, or the like. In an example embodiment, the lending exploration platform 50 may include, host or otherwise be operably coupled to various models and/or engines for performing specific functions associated with the overall function of evaluating loan applications and making corresponding approval decisions. In an example embodiment, such models or engines may include the financing model 60, and an exploration engine 70 as described herein. Some of the specific components or structures associated with the lending exploration platform 50 of an example embodiment will be described in reference to FIG. 2 below.

FIG. 2 shows certain elements of an apparatus for provision of the lending exploration platform 50 or other processing circuitry according to an example embodiment. The apparatus of FIG. 2 may be employed, for example, as the lending exploration platform 50 itself operating at, for example, a network device, server, proxy, or the like (e.g., the application server 42 or client 20 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42) or by devices in a client/server relationship (e.g., the application server 42 and one or more clients 20). Thus, although FIG. 2 illustrates the lending exploration platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating receipt of financial information (e.g., from one of the clients 20) in association with a loan application and evaluating whether to grant or issue a corresponding loan is shown. However, the apparatus is further configured to explore lending improvements, or more particularly financing model improvements in accordance with an example embodiment. In this regard, the lending exploration platform 50 may be configured to perform analysis, modeling, experimentation or other determinations based on the signaling and/or the information provided to explore possible financing model improvements based on the success of candidates that would normally be rejected by the financing model. The apparatus may be an embodiment of the lending exploration platform 50 and/or modules thereof or a device of the application server 42 hosting the lending exploration platform 50 and/or modules thereof. As such, configuration of the apparatus as described herein may transform the apparatus into the lending exploration platform 50 and modules thereof. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU), or any other processing device. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located (e.g., at one of the clients 20, or at another device).

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or nonvolatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the lending exploration platform 50 and/or modules thereof, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the lending exploration platform 50 or modules thereof as described below.

The lending exploration platform 50 may be configured to include tools to facilitate exploring options for improving the productivity of the loan application process for the facilitator. In particular, for example, if the model that is used causes even one applicant who would have repaid the loan to be rejected, then the model has made a mistake with respect to that one applicant. The perfect model would be able, of course, to perfectly identify and approve applicants that will repay their loans. In the real world, it is understood and expected that some loans will not be profitable, but a balance can hopefully be achieved to have enough profitable loans approved to enable absorption of the losses that will inevitably occur. A FICO score is often a typical parameter that is used for defining a threshold of application approval (or at least defining a heavily weighted parameter in an approval process). Thus, in most cases, increasing loan volume can be accomplished by simply lowering the allowable FICO score. The lending exploration platform 50 actually approves some rejected customers (e.g., some with a FICO score below the threshold) in order to explore whether an improved or better model could be selected or determined that will more efficiently identify borrowers or customers that will repay their loans.

By expanding the pool of accepted candidates in a random way in strata below the normal acceptable threshold, some number of those otherwise rejected candidates will be able to be obtain loans that can be tracked. Some will likely prove to be good customers, who repay the loan. When a set of such individuals is determined, it may be possible to study common traits or characteristics of that set, to hopefully improve the modeling process. The tools provided by the lending exploration platform 50 may be provided in the form of various modules (or submodules) that may be instantiated by configuration of the processing circuitry 100. FIG. 2 illustrates some examples of modules that may be included in the lending exploration platform 50 and that may be individually configured to perform one or more of the individual tasks or functions generally attributable to the lending exploration platform 50 according to an example embodiment. However, the lending exploration platform 50 need not necessarily be modular. In cases where the lending exploration platform 50 employs modules, the modules may, for example, be configured to perform the tasks and functions described herein. In some embodiments, the lending exploration platform 50 and/or any components, modules or sub-modules comprising the lending exploration platform 50 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the lending exploration platform 50 and/or any modules thereof, as described herein.

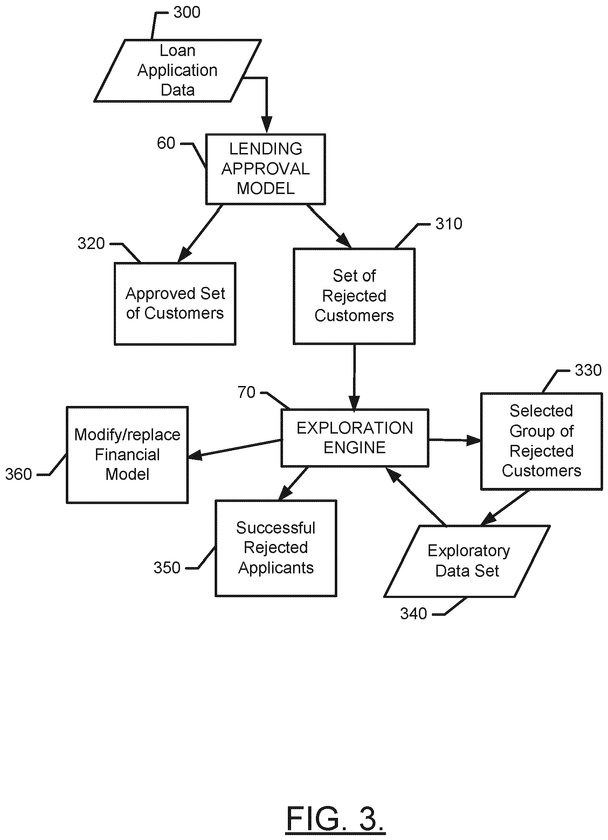

As shown in FIG. 2, the lending exploration platform 50 may include submodules such as the financing model 60, and the exploration engine 70, the operation of which is described in reference to FIG. 3 below. Each such submodule may be associated with specific functions or functionality for which the corresponding module has been configured (e.g., by a combination of hardware and/or software). However, as noted above, it should be appreciated that such functions need not necessarily be segmented into specific or separate modules, and code, instructions, or functional elements of any or all of the submodules could be shared or collocated in varying degrees in various examples. Nevertheless, the descriptions that follow, which divide the functions into respective component submodules, are provided for illustrating a convenient or possible way to instantiate one example embodiment.

The lending approval model 60 may be understood to be embodied as, or include, a model that is employable by processing circuitry (e.g., processing circuitry 100) to apply financial data provided by an applicant for a loan (e.g., a customer) in association with a loan application to obtain a score or other output value that can be evaluated for approving or denying approval (i.e., rejecting) the loan application. The lending approval model 60 may, in some cases, assign a weight or weighting factor to each of a plurality of parameters associated with the financial data provided by the customer. The weighting factors, when employed, may be fixed for each respective one of the parameters that the model uses. Based on all the inputs received (defined as loan application data 300 in FIG. 3), the lending approval model 60 may be used to produce a score, rating, value, or other output that may be compared to a threshold to determine whether to approve or reject the loan application. The lending approval model 60 may exist inside a scoring module, or other component that may be configured to use the lending approval model 60 to produce the score, rating, value, or other output. The scoring module may be embodied via the processing circuitry 100 or may even be a part of the exploration engine 70 among other alternative structural paradigms for its construction.

In some cases, scores, ratings, values or other outputs that fall below the threshold may result in the corresponding loan applications being rejected or denied. Customers that are rejected based on the operation of the lending approval model 60 may be considered to define a rejected population and may be considered to be a set of rejected customers 310. Scores, ratings, values or other outputs that fall above the threshold may result in the corresponding loan applications being accepted or approved. Customers that are approved based on the operation of the lending approval model 60 may define an approved population, and may be considered to be an approved set of customers 320. The threshold could, as noted above, generally be shifted up or down (e.g., as in the case of changing a FICO score threshold). However, example embodiments may further employ the exploration engine 70 to enable the lending approval model 60 to provide for an expansion of the candidate pool that is evaluated for potential model enhancement, which may include the lending approval model 60 being replaced, updated or otherwise improved in the manner described herein.

In this regard, as noted above, only the approved set of customers 320 is able to be tracked with respect to paying back the loan. Thus, it is not possible to determine where the lending approval model 60 could be improved to find more applicants that can be approved, and will pay back the loan. To provide a technical means by which to explore the normally inaccessible space for potential improvement of the lending approval model 60, example embodiments employ the exploration engine 70.

The exploration engine 70 may operate after loan application data 300 is processed by the lending approval model 60. The exploration engine 70 be configured to identify a selected group of rejected customers 330 that will, in spite of their rejection under the lending approval model 60, be approved for the loan. The performance of the selected group of rejected customers 330 may thereafter be tracked. In particular, for example, loan repayment activity of the selected group of rejected customers 330 may define an exploratory data set 340 that would otherwise not exist. Within the exploratory data set 340, it is expected that some customers of the selected group of rejected customers 330 may fail to repay their loans, whereas others will repay their loans. The customers from the selected group of rejected customers 330 that repay their loans may define what is called a set of successful rejected applicants 350. The set of successful rejected applicants 350 was rejected, improperly, by the lending approval model 60 from the perspective of the exploration engine 70. Thus, the exploration engine 70 may, by analyzing the set of successful rejected applicants 350, be able to identify where or how the lending approval model 60 erred in deciding to reject the set of successful rejected applicants 350. If the analysis can indeed identify where or how the "mistake" was made, it may thereafter be possible to improve the lending approval model 60 to correct its mistake, or to replace the lending approval model 60 with a better model that would approve more of the set of successful rejected applicants (and other applicants like them). Thus, at operation 360, the exploration engine 70 may modify or replace the lending approval model 60.

The analysis performed by the exploration engine 70 may include, for example, an analysis of all of the signals and corresponding parameters that were processed by the lending approval model 60. These signals and/or corresponding parameters may be compared to the rest of the selected group to determine whether they are distinct (e.g., different by a threshold amount). If certain distinct signals or parameters can be identified as being common to the set of successful rejected applicants, then the corresponding parameters could be adjusted with respect to their processing by the lending approval model 60. In this regard, for example, the weighting of the parameters may be adjusted to improve the lending approval model 60, or a different model with different parameter weighting, that performs better with respect to approval of the set of successful rejected applicants may be substituted for the lending approval model 60. Thus, for example, the lending approval model 60 may modified by determining a set of common signal trends associated with the set of successful rejected applicants 350, and modifying model parameters of the lending approval model 60 based on the common signal trends.

In a typical case, it may be expected that whatever the threshold for approval may be in relation to the operation of the lending approval model 60 to determine the set of rejected customers, a density rejected applicants that could be successful would be higher closer to the threshold. Thus, when selecting the selected group of rejected customers 330, the exploration engine 70 may focus more on selecting candidates that are closer to the threshold. To accomplish this, the exploration engine 70 may be configured to divide the group of rejected customers 330 into multiple strata on the basis of proximity to the threshold. Thus, for example, the strata may be defined based on successively lower FICO score, or other rating thresholds. For FICO score, the first stratum could be 10 points below the approval threshold. The next stratum could be 20 points below the first stratum, and any number of additional strata may be defined below that. Within each strata, the exploration engine 70 may randomly select candidates in the strata. The random selection ensures that the selection of the selected group of rejected customers 330 is not the same as just lowering the qualifying FICO score. By random selection, no preference is given to any parameter that may be used by the lending approval model 60, and thus it may be more analytically neutral when distinguishing common characteristics are searched for among the set of successful rejected applicants 350.

The random selection could also extend into other strata, but be focused more on the stratum closest to the threshold. Thus, for example, 80% of the selected group of rejected customers 330 may be chosen (e.g., randomly) from the first stratum below the threshold, 19% of the selected group of rejected customers may be chosen (e.g., randomly) from the second stratum below the threshold, and 1% of the selected group of rejected customers may be chosen from the third stratum below the threshold. This distribution may provide a good data set in which to explore, while also minimizing the population of higher risk candidates within the selected group of rejected customers 330.

Once the successful rejected applicants 350 can be studied from the exploratory data set 340 for common signal trend analysis, and any such common trends or distinct parameters that are shared are identified, the exploration engine 70 may work to improve the process by either improving the lending approval model 60 or by replacing the lending approval model 60 with a different (and better performing) model. In this regard, for example, the lending approval model 60 may be improved by altering weighting criteria for distinct parameters. Alternatively, the lending approval model 60 may be replaced with a different model having different weighting criteria. To check or confirm the improvement, the loan application data 300 could be rerun through the updated lending approval model or the new/replacement model to determine whether a larger number of the successful rejected applicants are selected for approval by the updated lending approval model or the new/replacement model.

As can be appreciated from the description above, the exploration engine 70 may continuously operate to improve model performance, and thereby also improve financial performance of the loans that are extended. In this regard, with more accurate identification of candidates who are likely to be successful (e.g., by paying back their loans), better financial performance will follow as loan volume may increase without a corresponding proportional (or worse) rate of default on the loans. Thus, the exploration engine 70 may, in some cases, continuously or periodically select a predetermined number or percentage of rejected candidates for inclusion in the exploration described herein, thereby making the selected group of rejected customers 330 a dynamically changing group with membership being updated continuously or at predetermined intervals (e.g., monthly, bi-weekly, semi-annually, etc.). Continuous operation of the exploration engine 70 may also result in continuous improvement of the lending exploration platform 50.

Unlike conventional systems, which generally simply enable the threshold value output by the lending approval model to be modified, example embodiments provide a technical means to explore ways to improve the model itself via a technical means by which to ensure that a balance of risks and rewards are considered. In this regard, example embodiments provide a strategic way to balance the risk of being too over inclusive in relation to granting loans against the desire to explore whether the current model may be under inclusive. Without the hardware and programmed software described herein, the models that are used for approving loan applications are much more stagnant and inflexible, and the unique balancing of interests and valuable result described above cannot be achieved. The result, which empowers lenders to meet their goals and set new higher goals, by identifying the best model for avoiding exclusion of applicants that will pay back loans, creates a technical means by which to create a win-win scenario for participants in the system by giving more people access to credit they desire, while also ensuring that the lender does not necessarily have to absorb more losses to grant that additional access.

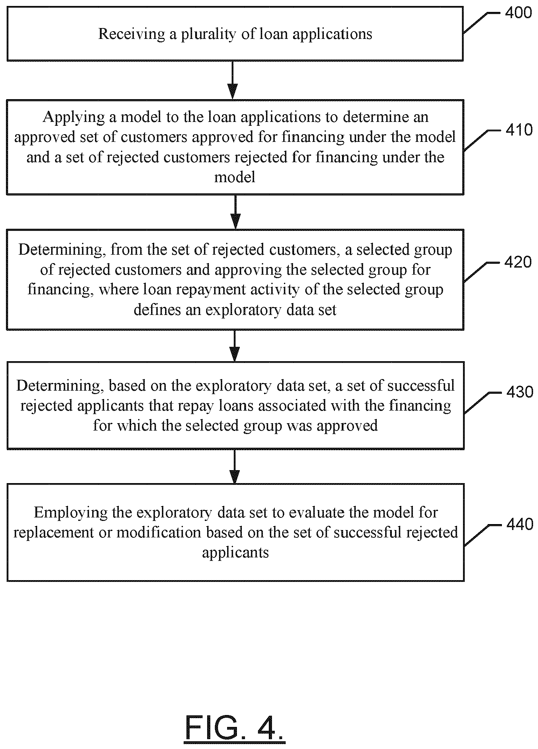

From a technical perspective, the lending exploration platform 50 described above may be used to support some or all of the operations described above. As such, the apparatuses described in FIGS. 1-3 may be used to facilitate the implementation of several computer program and/or network communication based interactions. As an example, FIG. 4 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method for exploring lending approval model improvement may include according to one embodiment of the invention is shown in FIG. 4. The method may include receiving a plurality of loan applications at operation 400 and applying a model to the loan applications to determine an approved set of customers approved for financing under the model and a set of rejected customers rejected for financing under the model at operation 410. The method may further include determining, from the set of rejected customers, a selected group of rejected customers and approving the selected group for financing, where loan repayment activity of the selected group defines an exploratory data set at operation 420. The method may also include determining, based on the exploratory data set, a set of successful rejected applicants that repay loans associated with the financing for which the selected group was approved at operation 430, and employing the exploratory data set to evaluate the model for replacement or modification based on the set of successful rejected applicants at operation 440.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, employing the exploratory data set to evaluate the model for replacement or modification may include modifying the model based on the set of successful rejected applicants. In an example embodiment, modifying the model may include determining a set of common signal trends associated with the set of successful rejected applicants, and modifying model parameters of the model based on the common signal trends. In some cases, modifying the model parameters may include increasing a weighting of a signal associated with the common signal trends in relation to approving candidate loan applications to make the model, as modified, more likely to approve the set of successful rejected applicants when the model, as modified, is rerun on the selected group. In an example embodiment, modifying the model may include determining a set of parameters that are inputs to the model for which a trend in the set of parameters is recognizable for the set of successful rejected applicants, and adjusting weighting of each of the set of parameters to make the model, as modified, more likely to approve the set of successful rejected applicants when the model, as modified, is rerun on the selected group. In some cases, employing the exploratory data set to evaluate the model for replacement or modification may include employing a second model to evaluate the exploratory data set and, responsive to the second model generating a higher rate of approval of the set of successful rejected applicants, replacing the model with the second model. In an example embodiment, determining the selected group may include segmenting the set of rejected customers into strata based on proximity to a boundary between the set of rejected customers and the set of approved customers, and defining the selected group (which may in some cases be defined randomly) from a stratum closest to the boundary. In some cases, determining the selected group comprises segmenting the set of rejected customers into strata based on proximity to a boundary between the set of rejected customers and the set of approved customers, and defining the selected group (which may in some cases be defined randomly) from multiple one of the strata, with a largest proportion of the selected group being in a stratum closest to the boundary.

In an example embodiment, an apparatus for performing the method of FIG. 4 above may comprise a processor (e.g., the processor 102) or processing circuitry configured to perform some or each of the operations (400-440) described above. The processor may, for example, be configured to perform the operations (400-440) by performing hardware implemented logical functions, executing stored instructions, or executing algorithms for performing each of the operations. In some embodiments, the processor or processing circuitry may be further configured for additional operations or optional modifications to operations 400 to 440.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for exploring lending approval model improvement, the method comprising:
receiving a plurality of loan applications;
applying a model to the loan applications to determine an approved set of customers approved for financing under the model and a set of rejected customers rejected for financing under the model;
determining, from the set of rejected customers, a selected group of rejected customers and approving the selected group for financing, wherein loan repayment activity of the selected group defines an exploratory data set;
determining, based on the exploratory data set, a set of successful rejected applicants that repay loans associated with the financing for which the selected group was approved; and
employing the exploratory data set to evaluate the model for replacement or modification based on the set of successful rejected applicants.

2. The method of claim 1, wherein employing the exploratory data set to evaluate the model for replacement or modification comprises modifying the model based on the set of successful rejected applicants.

3. The method of claim 2, wherein modifying the model comprises determining a set of common signal trends associated with the set of successful rejected applicants, and modifying model parameters of the model based on the common signal trends.

4. The method of claim 3, wherein modifying the model parameters comprises increasing a weighting of a signal associated with the common signal trends in relation to approving candidate loan applications to make the model, as modified, more likely to approve the set of successful rejected applicants when the model, as modified, is rerun on the selected group.

5. The method of claim 2, wherein modifying the model comprises determining a set of parameters that are inputs to the model for which a trend in the set of parameters is recognizable for the set of successful rejected applicants, and adjusting weighting of each of the set of parameters to make the model, as modified, more likely to approve the set of successful rejected applicants when the model, as modified, is rerun on the selected group.

6. The method of claim 1, wherein employing the exploratory data set to evaluate the model for replacement or modification comprises employing a second model to evaluate the exploratory data set and, responsive to the second model generating a higher rate of approval of the set of successful rejected applicants, replacing the model with the second model.

7. The method of claim 1, wherein determining the selected group comprises segmenting the set of rejected customers into strata based on proximity to a boundary between the set of rejected customers and the set of approved customers, and defining the selected group from a stratum closest to the boundary.

8. The method of claim 1, wherein determining the selected group comprises segmenting the set of rejected customers into strata based on proximity to a boundary between the set of rejected customers and the set of approved customers, and defining the selected group randomly from a stratum closest to the boundary.

9. The method of claim 1, wherein determining the selected group comprises segmenting the set of rejected customers into strata based on proximity to a boundary between the set of rejected customers and the set of approved customers, and defining the selected group from multiple one of the strata, with a largest proportion of the selected group being in a stratum closest to the boundary.

10. The method of claim 1, wherein determining the selected group comprises segmenting the set of rejected customers into strata based on proximity to a boundary between the set of rejected customers and the set of approved customers, and defining the selected group randomly from multiple one of the strata, with a largest proportion of the selected group being in a stratum closest to the boundary.

11. An apparatus for exploring lending approval model improvement, the apparatus comprising processing circuitry configured to perform the method of any of claims 1-10.
